# EUROPEAN PATENT SPECIFICATION

(11) **EP 1 472 886 B1**
(45) Date of publication and mention of the grant of the patent: **04.04.2007**
(21) Application number: 02790593.4
(22) Date of filing: 12.12.2002
(51) Int. Cl.: H04N 7/50

(54) **COMPUTATION OF COMPRESSED VIDEO INFORMATION**
BERECHNUNG VON KOMPRIMIERTEN VIDEOINFORMATIONEN
CALCUL D'INFORMATIONS VIDEO COMPRESSEES

(30) Priority: 22.01.2002 EP 02075252
(43) Date of publication of application: 03.11.2004
(73) Proprietor: Koninklijke Philips Electronics N.V., 5621 BA Eindhoven (NL)
(72) Inventor: VAN HALEN, Wilhelmus, A., H., NL-5656 AA Eindhoven (NL); BRULS, Wilhelmus, H., A., NL-5656 AA Eindhoven (NL); VAN DER HEIJDEN, Gerardus, W., T., NL-5656 AA Eindhoven (NL)
(74) Representative: Groenendaal, Antonius W. M.
(86) International application number: PCT/IB2002/005497
(87) International publication number: WO 2003/063506

(56) References cited:
- US-A- 5 508 743
- US-B1- 6 275 614
- RAJAGOPALAN R ET AL: "MOTION OPTIMIZATION OF ORDERED BLOCKS FOR OVERLAPPED BLOCK MOTION COMPENSATION" IEEE TRANSACTIONS ON CIRCUITS AND SYSTEMS FOR VIDEO TECHNOLOGY, IEEE INC. NEW YORK, US, vol. 8, no. 2, 1 April 1998 (1998-04-01), pages 119-123, XP000740079 ISSN: 1051-8215
- SATO J ET AL: "Dynamic rate control methods for continuous media transmission" INFORMATION NETWORKING, 1998. (ICOIN-12). PROCEEDINGS., TWELFTH INTERNATIONAL CONFERENCE ON TOKYO, JAPAN 21-23 JAN. 1998, LOS ALAMITOS, CA, USA,IEEE COMPUT. SOC, US, 21 January 1998 (1998-01-21), pages 110-115, XP010265287 ISBN: 0-8186-7225-0
- RAU M A ET AL: "Adaptive CPU scheduling policies for mixed multimedia and best-effort workloads" MODELING, ANALYSIS AND SIMULATION OF COMPUTER AND TELECOMMUNICATION SYSTEMS, 1999. PROCEEDINGS. 7TH INTERNATIONAL SYMPOSIUM ON COLLEGE PARK, MD, USA 24-28 OCT. 1999, LOS ALAMITOS, CA, USA,IEEE COMPUT. SOC, US, 24 October 1999 (1999-10-24), pages 252-261, XP010356898 ISBN: 0-7695-0381-0

## Description

The invention relates to an apparatus for compressing video information and to a method of operating such an apparatus.

From US patent No. 5, 508, 743 a compression apparatus is known. Various techniques are known for the compression of video (moving image) information. These techniques aim to reduce the amount of bandwidth required to transmit or store the compressed video information, while maximizing the quality of the image that can be obtained upon decoding of the compressed video information.

MPEG is a well known series of standards for representing compressed video information. Strictly speaking MPEG prescribes only decoding techniques, but of course the allowable decoding techniques also have implications for encoding and compression. Each MPEG decoding standard supports various forms of compression of video information. For example, some of the frames in a sequence of frames that makes up the video information (so-called P frames and B frames) may be encoded in terms of changes with respect to neighboring frames in the sequence. Only part of the frames (so-called I frames) have to be encoded independently of other frames. Another compression technique supported by MPEG is to divide the frames into rectangular blocks, to compute, for each block, a digital cosine transformation of the information in the blocks and to set the quantization level of different elements of the transformed information selectively so that a minimum of visible artefacts occur in the decoded image.

Various compression techniques have been developed to optimize the image quality of a compressed image with a limited amount of bandwidth that can be decoded in real time (at the rate at which the video information has to be displayed, for example with 50 or 60 frames per second) with a limited amount of computational resources for decoding. US patent No. 5, 508, 743 for example, selects the rate at compression switches between encoding changes between frames and encoding independent of neighboring differently for different blocks. US 5, 508, 743 describes that this rate can be adapted after abrupt image changes so as to reduce the bandwidth required for the signal.

This kind of technique ensures that decoding (decompression) can be performed in real time by a specified decoding apparatus, often an apparatus dedicated to decoding. The computational operations needed for compression on the other hand can, in principle, be performed by any computing apparatus. This changes when real time compression operation is needed (compression at the rate at which the video information arrives, for example with 50 or 60 frames per second). In this case the compression apparatus has to be designed with a sufficient amount of computational power to perform compression.

It is desirable to perform video signal compression with a programmable computer that can be used for several tasks concurrently, that is, not only for encoding the video signal. In this case, a sufficient amount of computational resources has to be reserved for the real time compression task, the remaining tasks getting only the remainder of the resources, or whatever resources are left over when fewer resources are temporarily needed for compression due to the content of the video information. This means that a very powerful and therefore expensive computer is needed for real time compression.

A method of transmitting image information is known from an article by J. Sato et al., published in the Proceedings of the Twelfth International Conference on Information Networking, (Tokyo, Japan 21-23 Jan. 1998) pages 110-115 by the IEEE Computing society US on January 21, 1998 (EPO reference XP10265287; ISBN 0-8186-7225-0) titled "Dynamic rate control methods for continuous media transmission". In this article it is proposed to increase the time interval between packets in which video data is transmitted when the pack loss rate exceeds a threshold due to CPU loads in a client or a server. The increased time interval can have the effect that the normal frame rate cannot be attained at a client. It is suggested to sub-sample the source video in this case. Thus, less information is transmitted when the CPU load is high.

Amongst others, it is an object of the invention to provide for a real time compression technique that requires a less powerful computer and/or leaves more room to perform other tasks concurrently with real time compression.

The invention provides for a method of computing compressed video information with a computing device according to claim 1.

Thus the compression rate is controlled dependent on the available computational resources. Preferably, the quality of the compressed image is kept substantially constant, at the expense of higher bandwidth when less of the computational resource is available. This should be distinguished from conventional techniques which aim to adapt the compression technique according to bandwidth limitations (bandwidth not being a computational resource). In the latter technique more compression, or even complete suppression of information is normally used when the limits of the available bandwidth are reached. In contrast, according to the present invention less compression is used when the limits of computational resources are reached.

Preferably, the method comprises selecting, dependent on said extent, between encoding at least part of a frame from a sequence of frames from the video information alternatively using a first process by means of change information relative to a neighboring frame or a second process independent from any neighboring frame in said sequence, the first or second process being selected when said extent is below or below the threshold respectively. Thus, in an MPEG encoding process more I frames are used when little resources are available for encoding and more P or B frames are used when more resources are available. Of course, a minimum number of I frames may be included independent of the available resources as required according to MPEG recommendations.

Selection between independent coding and change coding, which latter requires more computational resources than independent coding but leads to a greater compression rate than independent coding, is a simple an effective way to realize adaptation of resources used for encoding. Of course, other ways of adaptation may also be used, such as adaptation of the resolution of the frames that are compressed.

The method may preferably be used in a multitasking computer, in which case the rate of compression is selected dependent on the resources left by other tasks executed by the processor.

These and other advantageous aspects and advantages of the apparatus and method according to the invention will be described using the following figures.
Figure 1 shows a system for processing video information
Figure 2 shows relations between encoded frames of video information.

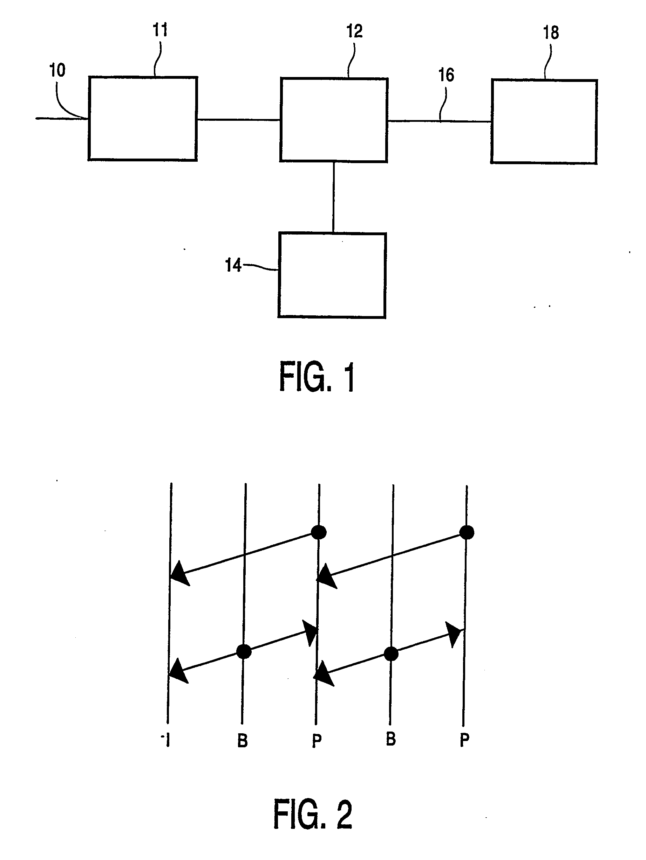

Figure 1 shows a system with an input 10 for receiving video information, an input memory 11, a processor 12, a working memory 14, a transfer medium 16 and a decompression apparatus 18. The input 10 is coupled to the input memory 11. The processor 12 is coupled to the input memory 11, the working memory 14 and the medium 16. The decompression apparatus 18 is coupled to the medium 16.

In operation, a video signal that comprises video information describing a sequence of frames (two-dimensional images) arrives at input 10. The video information is stored in input memory 11. Processor 12 reads the video information from input memory 11 an compresses the video information (using working memory 14 for intermediate information) and sends the compressed information to medium 16. Medium 16 is for example a memory device (such as a hard disk, an optical disk, a magnetic tape etc.) or a transmission channel such as a data bus or a broadcast channel. Decompression apparatus 18 reads the compressed video information from medium 16, decompresses this information and displays it on a display screen (not shown), or subjects it to further processing.

Compression is performed by processor 12 for example in order to obtain a compressed signal in accordance with an MPEG standard. Within the definition of compressed video signals according to the MPEG standard several types of compression are known. One of these is the use of prediction of the content of frames from the content of directly or indirectly neighboring frames. Examples of this kind of prediction are single direction prediction (forward or backward, from a preceding or following frame) and interpolation between frames in two directions.

Figure 2 illustrates the relation between different frames according to the MPEG standards. Display time runs in the horizontal direction. A number of successive frames (or pictures) from the video signal, labelled I, B and P are indicated successively. An I frame (or I picture) is a frame that can be decoded independently of the other frames. A P frame is a frame that is decoded by reference to (extrapolation from) a preceding or following frame, usually a preceding frame. In figure 2 this kind of reference is indicated by arrows pointing at the frame from which the P frame is derived during decoding. A B frame is a frame that is decoded by interpolation between neighboring frames in forward and backward directions. In figure 2 the frames from which the B frame is interpolated are indicated by arrows from the B frame.

The relation between P frames or B frames and the frames they refer to may be expressed for example in terms of displacement vectors. The idea behind this is that the content of the frames does not change very much from one frame to another and even then only mainly by displacement of areas (e.g. moving objects) from one position in one frame to another position in another (neighboring) frame. As a result the content of that other frame can be expressed by means of vectors that represent the displacements of different areas in the frame and optionally some correction information for correcting inaccuracies of such a prediction (the displacement vectors being carefully selected to minimize the inaccuracies).

When B frames or P frames are used the processor 12 has to search for values of the displacement vectors that minimize the inaccuracies of the prediction or interpolation of the B or P frame. This requires a large amount of computational effort, involving for example computation of correlation coefficients between each area from one frame and a number of areas from another frame. More effort is needed to make full use of B frames than for P frames since area's from two neighboring frames need to be compared in case of B-frames instead of one as in the case of P frames.

Processor 12 is preferably a multitasking processor, capable of executing one or more other tasks concurrently with the compression task. That is, it runs under control of an operating system that computes how much of the computational resources of the processor are in use by various tasks and makes unused computational resources available to the tasks. Thus, the different tasks share various computational resources of the processor 12. In an example of sharing computational resources the tasks may run alternately on processor 12, each getting a fraction of processing time. In another example each task may be allowed to use only its own fraction of working memory 14 (or local processor 12 memory), to use certain co-processors etc.

In principle a fixed amount of resources, sufficient for compression, could be reserved for the compression task. However, if the compression task were limited to such a fixed amount, the amount of compression (which grows in with to the amount of computational effort used) would thus need to be limited or little computational resources would be left for the other task.

According to the invention, this is circumvented by adapting the amount of compression according to the amount of computational resources left over by the other tasks. In a particular embodiment, a choice whether to encode a frame on one hand as an I frame or on the other hand as a B or P frame, is made under control of a signal representing this amount of computational resources.

Preferably, compression is executed by processor 12 under control of a computer program that selects whether to use an I frame, a P frame or a B frame for encoding a frame of the incoming video information. The program makes a basic selection of frames that are to be encoded as I frames on the basis of the needs of MPEG encoding, for example the need to have an independently coded frame every so many milliseconds. The program selects to encode one or more of remaining frames as on one hand I frames or on the other hand encoded as B or P frames dependent on whether less or more than a minimum amount of resources are available respectively. In a further embodiment a selection is even made whether to encode a frame as a B frame or a P frame dependent on the available resources, a P frame (one directional prediction) being selected when relatively less resources are available.

Thus, a higher compression rate is realized when the other tasks leave more resources free and a lower compression rate is realized when the other tasks leave fewer resources free. In principle the other task may be of any kind that can be executed by the processor 12, including possibly other image compression tasks. In an embodiment, there need not even be other tasks, the amount of resources left over being resources left over by the compression task itself, dependent on the nature of the video signal being compressed.

Thus, the image quality of the compressed image can be kept more or less constant with a variable amount of computing resources, be it at the expense of a variable use of bandwidth in medium 16.

It will be appreciated that the invention can be applied to any kind of processor 12 that is capable of executing a compression task. Preferably, processor 12 is a general purpose processor 12 such as a MIPS processor or a VLIW processor, but the inventions may be applied to more specialized processors such as signal processors as well.

Although the invention has been explained in terms of the selection whether or not to encode a frame independent of other frames or in terms of changes to one or more neighboring frames under control of a signal representing the availability of resources, it will be appreciated that the adaptation to the available resources can also be applied to other aspects of compression. For example to adaptation of the resolution with which the video information is encoded.

## Claims

1. A method of computing compressed video information with a computing device(18), the method comprising automatically selecting an amount of compression used by the computing device (18) under control of an extent to which a computational resource for compression is detected to be available in the computing device (18), a less or more resource intensive compression technique being selected, decreasing and increasing the amount of compression when the extent is below or in excess of a threshold respectively.

2. A method according to Claim 1, wherein said selecting the amount of compression comprises selecting, dependent on said extent, between encoding at least part of a frame from a sequence of frames from the video information alternatively using a first process by means of change information relative to a neighboring frame or a second process independent from any neighboring frame in said sequence, the first or second process being selected when said extent is below or in excess of the threshold respectively.

3. A method according to Claim 1 or 2, wherein said selecting an amount of compression comprises selecting, dependent on said extent, between encoding a frame from a sequence of frames from the video information alternatively using a first process by means of interpolation between neighboring frames in forward and backward directions or a second process by means of change information relative to one neighboring frame, the first or second process being selected when said extent is below or excess of the threshold respectively.

4. A method according to Claim 1 wherein the amount of compression is selected to keep the quality of the compressed image is constant, at the expense of higher bandwidth when less of the computational resource is available.

5. A computing apparatus (18) arranged to compress video information, the computing apparatus (18) being arranged to adapt an amount of compression under control of an extent to which a computational resource for compression is detected to be available in the computing apparatus (18), a less or more resource intensive compression technique, decreasing and increasing the amount of compression, being selected when the extent is below or in excess of a threshold respectively.

6. A computing apparatus (18) according to Claim 5, arranged to execute a plurality of tasks concurrently, each task using a share of the computational resource of the apparatus (18), the tasks including said compression of video information and one or more remaining tasks, wherein the computing apparatus (18) is arranged to select the compression technique dependent on a size of a remaining share of the computational resource that is not used by the one or more remaining tasks.

7. A computing apparatus (18) according to Claim 5, arranged to select the amount of compression by selecting between encoding at least part of a frame from a sequence of frames from the video information alternatively using a first process by means of change information relative to a neighboring frame in said sequence or using a second process independent of any neighboring frames in said sequence, the computing apparatus (18) comprising means to select between the first and second process under control of a signal that represents said extent, the first or second process being selected when said extent is below or the above threshold level respectively.

8. A computing apparatus (18) according to Claim 5 or 7, arranged to select the amount of compression by selecting, dependent on said extent, between encoding a frame from a sequence of frames from the video information alternatively using a first process by means of interpolation between neighboring frames in forward and backward directions or a second process by means of change information relative to one neighboring frame, the first or second process being selected when said extent is below or excess of the threshold respectively.

9. A computing apparatus (18) according to Claim 5, wherein the amount of compression is selected to keep the quality of the compressed image constant, at the expense of higher bandwidth when less of the computational resource is available.

10. A computer program product comprising a computer program arranged to cause a computing apparatus(18) to compress video information, the compression being arranged to adapt an amount of compression under control of an extent to which a computational resource for compression is detected to be available in the computing apparatus(18), a less or more resource intensive compression technique being selected, decreasing and increasing the amount of compression, when the extent is below or in excess of a threshold respectively.

## Patentansprüche

1. Verfahren zum Berechnen komprimierter Videoinformation mit einer Rechenanordnung (18), wobei das Verfahren das automatische Selektieren eines Betrags an Kompression umfasst, die in der Rechenanordnung (18) angewandt wird, und zwar unter Ansteuerung eines Ausmaßes davon ein Rechenmittel für Kompression als in der Rechenanordnung (18) verfügbar detektiert wird, wobei eine mehr oder weniger mittelintensive Kompressionstechnik selektiert wird, wobei der Betrag an Kompression verringert und vergrößert wird, wenn das Ausmaß unterhalb bzw. über einer Schwelle liegt.

2. Verfahren nach Anspruch 1, wobei das genannte Selektieren des Betrags an Kompression das Selektieren umfasst, und zwar abhängig von dem genannten Ausmaß, zwischen der Codierung wenigstens eines Teils eines Frames aus einer Sequenz von Frames aus der Videoinformation, wobei auf alternative Weise ein erster Prozess angewandt wird, und zwar durch Änderung von Information gegenüber einem Nachbarframe oder ein zweiter Prozess, unabhängig von einem Nachbarframe in der genannten Sequenz, wobei der erste oder der zweite Prozess selektiert wird, wenn das genannte Ausmaß unterhalb bzw. über der Schwelle liegt.

3. Verfahren nach Anspruch 1 oder 2, wobei das genannte Selektieren eines Betrags an Kompression das Selektieren umfasst, und zwar abhängig von dem genannten Ausmaß, zwischen der Codierung eines Frames aus einer Sequenz von Frames aus der Videoinformation, und zwar durch alternative Anwendung eines ersten Prozesses durch Interpolation zwischen Nachbarframes in der Vorwärts- und Rückwärtsrichtung oder eines zweiten Prozesses durch Änderung von Information gegenüber einem einzigen Nachbarframe, wobei der erste oder der zweite Prozess selektiert wird, wenn das genannte Ausmaß unterhalb bzw. über der Schwelle liegt.

4. Verfahren nach Anspruch 1, wobei der Betrag an Kompression derart selektiert wird, dass die Qualität des komprimierten Bildes nach wie vor konstant ist, und zwar auf Kosten einer größeren Bandbreite, wenn weniger Rechenmittel verfügbar ist.

5. Rechenanordnung (18), vorgesehen zum Komprimieren von Videoinformation, wobei die Rechenanordnung (18) dazu vorgesehen ist, einen Betrag an Kompression anzupassen, und zwar unter Ansteuerung eines Ausmaßes davon ein Rechenmittel für Kompression als in der Rechenanordnung (18) verfügbar detektiert wird, wobei eine mehr oder weniger mittelintensive Kompressionstechnik selektiert wird, wobei der Betrag an Kompression verringert und vergrößert wird, wenn das Ausmaß unterhalb bzw. über einer Schwelle liegt.

6. Rechenanordnung (18) nach Anspruch 5, vorgesehen zum gleichzeitigen Durchführen einer Anzahl Aufgaben, wobei jede Aufgabe einen Anteil des Rechenmittels der Anordnung (18) benutzt, wobei die Aufgaben die genannte Kompression von Videoinformation umfasst und eine oder mehrere restliche Aufgaben, wobei die Rechenanordnung (18) dazu vorgesehen ist, die Kompressionstechnik zu wählen, und zwar in Abhängigkeit von einer Größe eines restlichen Anteils des Rechenmittels, der nicht von einer oder mehreren restlichen Aufgaben verwendet worden ist.

7. Rechenanordnung (18) nach Anspruch 5, vorgesehen zum Selektieren des Betrags an Kompression durch Selektion zwischen Codierung wenigstens eines Teils eines Frames aus einer Sequenz von Frames aus der Videoinformation, wobei auf alternative Weise ein erster Prozess angewandt wird mit Hilfe einer Änderung der Information gegenüber einem Nachbarframe in der genannten Sequenz oder ein zweiter Prozess, unabhängig von Nachbarframes in der genannten Sequenz, wobei die Rechenanordnung (18) Mittel aufweist zum Selektieren zwischen dem ersten und dem zweiten Prozess, und zwar unter Ansteuerung eines Signals, das das genannte Ausmaß darstellt, wobei der erste oder der zweite Prozess selektiert wird, wenn das genannte Ausmaß unterhalb bzw. über dem Schwellenpegel liegt.

8. Rechenanordnung (18) nach Anspruch 5 oder 7, vorgesehen zum Selektieren des Betrags an Kompression durch Selektion, und zwar abhängig von dem genannten Ausmaß, zwischen Codierung eines Frames aus einer Sequenz von Frames aus der Videoinformation, und zwar durch alternative Anwendung eines ersten Prozesses mit Hilfe einer Interpolation zwischen benachbarte Frames in der Vorwärts und Rückwärtsrichtung oder eines zweiten Prozesses durch Änderung von Information gegenüber einem einzigen Nachbarframe, wobei der erste oder der zweite Prozess selektiert wird, wenn das genannte Ausmaß unterhalb bzw. über der Schwelle liegt.

9. Rechenanordnung (18) nach Anspruch 5, wobei der Betrag an Kompression derart selektiert wird, dass die Qualität des komprimierten Bildes konstant ist, und zwar auf Kosten einer größeren bandbreite, wenn weniger Rechenmittel verfügbar ist.

10. Computerprogrammprodukt mit einem Computerprogramm, vorgesehen um dafür zu sorgen, dass eine Rechenanordnung (18) Videoinformation komprimiert, wobei die Kompression dazu vorgesehen ist, einen Betrag an Kompression anzupassen, und zwar unter Ansteuerung eines Ausmaßes, für das ein Rechenmittel zur Kompression als in der Rechenanordnung (18) verfügbar detektiert wird, wobei eine mehr oder weniger mittelintensive Technik selektiert wird, wobei der Betrag an Kompression abnimmt oder zunimmt, wenn das Ausmaß unterhalb oder über einer Schwelle liegt.

## Revendications

1. Procédé de calcul d'informations vidéo compressées avec un dispositif de calcul (18), le procédé comprenant une sélection automatique d'une quantité de compression utilisée par le dispositif de calcul (18) sous la commande de la mesure de disponibilité d'une ressource de calcul pour compression détectée dans le dispositif de calcul (18), une technique de compression plus ou moins intensive en ressources étant sélectionnée, diminuant et augmentant la quantité de compression quand la mesure est respectivement en dessous ou au-dessus d'un seuil.

2. Procédé selon la revendication 1, dans lequel ladite sélection de la quantité de compression comprend la sélection, en fonction de ladite mesure, du codage d'au moins une partie d'une trame parmi une séquence de trames à partir des informations vidéo en utilisant alternativement soit un premier processus au moyen d'informations de changements en fonction d'une trame avoisinante, soit un deuxième processus indépendant de toute trame avoisinante dans ladite séquence, le premier ou le deuxième processus étant sélectionné quand ladite mesure est respectivement en dessous ou au-dessus du seuil.

3. Procédé selon la revendication 1 ou 2, dans lequel ladite sélection d'une quantité de compression comprend la sélection, en fonction de ladite mesure, du codage d'une trame parmi une séquence de trames à partir des informations vidéo en utilisant alternativement soit un premier processus au moyen d'interpolation entre des trames avoisinantes dans les directions avant et arrière, soit un deuxième processus au moyen d'informations de changement en fonction d'une trame avoisinante, le premier ou le deuxième processus étant sélectionné quand ladite mesure est respectivement en dessous ou au-dessus du seuil.

4. Procédé selon la revendication 1, dans lequel la quantité de compression est sélectionnée pour garder la qualité de l'image compressée constante, au prix d'une largeur de bande supérieure quand moins des ressources de calcul sont disponibles.

5. Appareil de calcul (18) aménagé pour compresser des informations vidéo, l'appareil de calcul (18) étant aménagé pour adapter une quantité de compression sous la commande de la mesure de disponibilité d'une ressource de calcul pour compression détectée dans l'appareil de calcul (18), une technique de compression plus ou moins intensive en ressources, diminuant et augmentant la quantité de compression, étant sélectionnée quand la mesure est respectivement en dessous ou au-dessus du seuil.

6. Appareil de calcul (18) selon la revendication 5, aménagé pour exécuter une pluralité de tâches en parallèle, chaque tâche utilisant un partage de ressources de calcul de l'appareil (18), les tâches incluant ladite compression d'informations vidéo et une ou plusieurs tâches restantes, dans lequel l'appareil de calcul (18) est aménagé pour sélectionner la technique de compression en fonction d'une taille d'une partie restante de la ressource de calcul qui n'est pas utilisée par lesdites une ou plusieurs tâches restantes.

7. Appareil de calcul (18) selon la revendication 5, aménagé pour sélectionner la quantité de compression en sélectionnant le codage d'au moins une partie d'une trame parmi une séquence de trames à partir d'informations vidéo en utilisant alternativement soit un premier processus au moyen d'informations de changements en fonction d'une trame avoisinante dans ladite séquence soit un deuxième processus indépendant de toute trame avoisinante dans ladite séquence, l'appareil de calcul (18) comprenant des moyens pour sélectionner le premier ou le deuxième processus sous la commande d'un signal qui représente ladite mesure, le premier ou le deuxième processus étant sélectionné quand ladite mesure est respectivement en dessous ou au-dessus du niveau de seuil.

8. Appareil de calcul (18) selon la revendication 5 ou 7, aménagé pour sélectionner la quantité de compression en sélectionnant, en fonction de ladite mesure, le codage d'une trame parmi une séquence de trames à partir des informations vidéo en utilisant alternativement soit un premier processus au moyen d'interpolation entre des trames avoisinantes dans les directions avant et arrière, soit un deuxième processus au moyen d'informations de changements en fonction d'une trame avoisinante, le premier ou le deuxième processus étant sélectionné quand ladite mesure est respectivement en dessous ou au-dessus du seuil.

9. Appareil de calcul (18) selon la revendication 5, dans lequel la quantité de compression est sélectionnée pour garder la qualité de l'image compressée constante, au prix d'une largeur de bande plus grande quand moins des ressources de calcul sont disponibles.

10. Produit programme informatique comprenant un programme informatique aménagé pour amener un appareil de calcul (18) à compresser des informations vidéo, la compression étant aménagée pour adapter une quantité de compression sous la commande de la mesure de disponibilité d'une ressource de calcul pour compression détectée dans l'appareil de calcul (18), une technique de compression plus ou moins intensive en ressources étant sélectionnée, diminuant et augmentant la quantité de compression, quand la mesure est respectivement en dessous ou au-dessus du seuil.
